# FASCICULE DE BREVET EUROPEEN

(11) **EP 2 279 341 B1**
(45) Date de publication et mention de la délivrance du brevet: **23.10.2013**
(21) Numéro de dépôt: 09738305.3
(22) Date de dépôt: 31.03.2009
(51) Int. Cl.: F02K 1/34, F02K 1/46

(54) **Dispositif de réduction du bruit généré par un réacteur d'aéronef à conduits de fluide coudés**
Vorrichtung zur Minderung des von einem Flugzeugtriebwerk mit gekrümmten Kanälen erzeugten Lärms
Device for reducing noise generated by an aircraft jet engine with curved ducts

(30) Priorité: 31.03.2008 FR 0852120
(43) Date de publication de la demande: 02.02.2011
(73) Titulaire: AIRBUS OPERATIONS, 31060 Toulouse (FR); Centre National de la Recherche Scientifique (C.N.R.S), 75016 Paris (FR); Universite De Poitiers, 86000 Poitiers (FR)
(72) Inventeur: HUBER, Jérôme, F-31000 Toulouse (FR); BONNET, Jean-Paul, F-86000 Poitiers (FR); DELVILLE, Joël, F-86000 Poitiers (FR); JORDAN, Peter, F-79120 Rom (FR); STREKOWSKI, François, 37520 LA RICHE (FR)
(74) Mandataire: Petit, Maxime
(86) Numéro de dépôt international: PCT/FR2009/000374
(87) Numéro de publication internationale: WO 2009/133271

(56) Documents cités:
- EP-A2- 1 580 417
- EP-A2- 1 936 172
- WO-A2-2008/100712
- FR-A- 1 542 668
- FR-A- 2 872 549
- FR-A- 2 892 152
- FR-A- 2 901 321
- US-A- 5 947 412
- M. B. ALKISLAR, G. W. BUTLER: "Significant Improvements on Jet Noise Reduction by Chevron-Microjet Combination (AIAA 2007-3598)" 12TH AIAA/CEAS AEROACOUSTICS CONFERENCE (28TH AIAA AEROACOUSTICS CONFERENCE), [Online] 21 mai 2007 (2007-05-21), - 23 mai 2007 (2007-05-23) XP002518550 Extrait de l'Internet: URL:http://pdf.aiaa.org/preview/CDReadyMAE RO07_1493/PV2007_3598.pdf> [extrait le 2009-03-10]
- B. S. HENDERSON, K. W. KINZIE, J. WHITMIRE, A. ABEYSINGHE: "The Impact of Fluidic Chevrons on Jet Noise (AIAA 2005-2888)" 11TH AIAA/CEAS AEROACOUSTICS CONFERENCE (26TH AEROACOUSTICS CONFERENCE), [Online] 23 mai 2005 (2005-05-23), - 25 mai 2005 (2005-05-25) XP002518551 MONTEREY, CALIFORNIA, USA Extrait de l'Internet: URL:http://pdf.aiaa.org/preview/CDReadyMAE RO05_1140/PV2005_2888.pdf> [extrait le 2009-03-10]

## Description

L'invention est relative à un réacteur d'aéronef selon la revendication 1.

De façon connue, un réacteur d'aéronef se présente sous la forme d'une nacelle au centre de laquelle est positionnée une turbomachine.

Cette nacelle est destinée à être montée sous la voilure d'un aéronef par l'intermédiaire d'un mât de réacteur.

La turbomachine est composée d'un générateur de gaz qui entraine une soufflante montée sur l'arbre du générateur de gaz, en amont de ce dernier suivant la direction longitudinale de la nacelle de réacteur.

Le flux d'air qui traverse longitudinalement la nacelle pénètre en partie dans le générateur de gaz et participe à la combustion.

Ce flux est appelé flux primaire et est éjecté en sortie du générateur.

La partie du flux d'air entrant dans la nacelle et qui ne traverse pas le générateur de gaz est entrainée par la soufflante.

Ce flux, appelé flux secondaire, s'écoule dans un passage annulaire, de façon concentrique par rapport au flux primaire. Ce passage est formé entre une paroi longitudinale externe (paroi de nacelle) et une paroi longitudinale interne entourant le générateur de gaz.

Le flux secondaire est éjecté de la nacelle à l'extrémité aval de la paroi externe de celle-ci suivant la direction sensiblement longitudinale du réacteur.

La paroi interne entourant le générateur du gaz définit également avec une pièce longitudinale interne un passage annulaire par lequel s'écoule le flux primaire.

Ce flux est éjecté à l'extrémité aval de la paroi interne qui entoure le générateur de gaz.

Lors des phases de décollage, le flux de gaz qui est éjecté (flux primaire et secondaire) adopte des vitesses très élevées. À ces vitesses, la rencontre du flux éjecté avec l'air environnant, de même que la rencontre du flux primaire et du flux secondaire génèrent un bruit important.

On connaît d'après la demande internationale WO2002/013243 un dispositif fluidique de réduction du bruit généré par un réacteur d'aéronef.

Ce dispositif comporte plusieurs paires de conduits débouchant en sortie d'une tuyère du réacteur éjectant un jet propulsif et qui sont répartis à la périphérie de cette tuyère.

Les conduits de chaque paire éjectent chacun un jet d'air et sont disposés de façon convergente l'un par rapport à l'autre pour générer en sortie un triangle d'interaction des jets d'air.

L'angle de convergence des conduits est compris entre 40 et 70°,

Par ailleurs, les conduits sont inclinés suivant un angle dit de pénétration en direction de l'axe longitudinal du réacteur le long duquel le flux de gaz est éjecté.

Cet angle permet aux jets éjectés par les conduits de pénétrer à l'intérieur du flux de gaz sortant de la tuyère du réacteur.

Cet angle correspond, par exemple, à l'inclinaison sur l'axe longitudinal du bord de fuite de l'extrémité aval de la tuyère, dans la mesure où les conduits sont agencés dans leur partie terminale le long de ce bord incliné.

Le document FR 2 901 321 décrit un procédé d'homogénéisation de l'air en sortie de turboréacteur pour abaisser le bruit généré. Une nacelle de réacteur d'aéronef comporte dans une section aval de la nacelle plusieurs diffuseurs reliés à un conduit de distribution en air, conçus de manière à posséder une forme adaptée aux lignes resserrées de l'aval de la nacelle.

Le document «Significant Improvements on Jet Noise Reduction by Chevron-Microjet Combination (AIAA 2007-3598)» décrit l'association de deux méthodes de réduction de bruit comprenant, d'une part, des micro-conduits émettant des jets de fluide et, d'autre part des chevrons mécaniques. Ces micro-conduits sont positionnés suivant un angle de pénétration de 60° par rapport à l'axe longitudinal de la tuyère.

Le document FR 2 892 152 décrit un dispositif permettant d'atténuer le bruit d'émission sur un turbomoteur. Des carters agencés en périphérie de la partie arrière du capot d'une soufflante se comportent comme des conduits munis d'un orifice de sortie. Les capots sont agencés de façon à éjecter des jets parallèles entre eux suivant un angle de dérapage formé avec l'axe longitudinal du système.

La Demanderesse s'est aperçue toutefois qu'en augmentant la valeur de l'angle de pénétration les jets interagissent davantage avec le flux de gaz éjecté de la tuyère, ce qui contribue à réduire davantage le bruit généré. Cet effet a notamment été constaté pour des angles de l'ordre de plusieurs dizaines de degrés.

Toutefois, la présence du bord de fuite biseauté de la tuyère (lèvre de sortie) rend difficile le choix de l'angle de pénétration et notamment son accroissement.

II serait par conséquent intéressant de pouvoir adapter facilement l'angle de pénétration des conduits à l'application souhaitée en tenant compte des contraintes d'environnement (exemple : bord de fuite biseauté de la tuyère).

En outre, lorsque l'on souhaite intégrer les conduits dans l'épaisseur de la paroi de la tuyère, il est difficile de sélectionner l'angle de pénétration que l'on souhaite compte tenu de ces contraintes d'intégration.

Ceci est d'autant plus vrai si l'on veut réduire l'encombrement généré par les conduits.

Par ailleurs, il pourrait également être intéressant de disposer, en association avec l'extrémité aval de la tuyère de réacteur, d'une configuration de conduit permettant d'orienter le jet sortant du conduit de façon contrôlée, dans une direction choisie, et moyennant un encombrement réduit.

La présente invention vise à remédier à au moins un des inconvénients précités et/ou à atteindre un des buts précités en proposant un réacteur d'aéronef comprenant une paroi entourant un premier flux de gaz qui est éjecté à une extrémité aval de la paroi suivant un axe longitudinal XX', un deuxième flux de gaz s'écoulant à l'extérieur de la paroi dans la direction d'éjection du premier flux de gaz, au moins un conduit agencé à la périphérie de l'extrémité aval de la paroi et qui est apte à éjecter un jet de fluide destiné à interagir avec l'un et/ou l'autre flux de gaz, ledit au moins un conduit comprenant une partie terminale munie à son extrémité libre d'un orifice de sortie par lequel le jet de fluide est éjecté, caractérisé en ce que la partie terminale comprend successivement une première portion de conduit rectiligne alignée suivant un axe dit médian et une seconde portion de conduit formant un coude par rapport à la portion rectiligne, la seconde portion ayant une extrémité libre munie de l'orifice de sortie et est suffisamment proche de l'axe médian de la première portion de manière à conférer à la partie terminale un encombrement réduit dans la direction de formation du coude.

La seconde portion formant un coude de faible extension radiale (transversale par rapport à l'axe médium) permet de donner facilement et de façon contrôlée au jet de fluide issu de l'orifice de sortie l'orientation souhaitée (angle effectif de sortie) malgré un espace disponible de taille limitée.

Par ailleurs, ce coude court formé dans la partie terminale du ou des conduits permet de contrôler efficacement le jet de fluide qui en est éjecté. Le coude assure un guidage approprié du jet en conférant des distributions de vitesse en sortie de l'orifice qui présentent des vitesses maximales et un écoulement parallèle.

Le contrôle serait en effet moins efficace si le coude se prolongeait par une portion droite sur une distance trop grande et, de plus, l'encombrement généré s'en trouverait augmenté.

En contrôlant la distance entre l'orifice de sortie et l'axe médian de la portion rectiligne on maitrise l'encombrement radial du ou des conduits.

Ceci permet d'associer facilement le ou les conduits à la paroi du réacteur malgré de nombreuses contraintes pénalisantes (encombrement, environnement...).

L'orifice de sortie ou la face de sortie du conduit comportant cet orifice ne doit pas être à une distance de l'axe supérieure à deux fois la valeur du rayon de la première portion (ou de sa demi-largeur ou demi-hauteur) afin de respecter un encombrement raisonnable. La distance est prise entre l'axe et le milieu de l'orifice.

On notera que le deuxième flux de gaz peut être l'air environnant lorsque le premier flux est le flux secondaire ou correspondre au flux secondaire lorsque le premier flux est le flux primaire.

Selon une caractéristique, la seconde portion formant un coude présente une courbure continue, c'est à dire que le rayon de courbure externe du coude est sensiblement constant sur toute son extension, depuis l'extrémité amont du coude en contact avec la portion rectiligne jusqu'à l'extrémité aval de sortie du coude.

En d'autres termes, le coude ne présente pas à l'extérieur de variation brusque de rayon de courbure.

Une telle portion incurvée permet de produire un jet de fluide qui se révèle particulièrement efficace pour atténuer le bruit généré par le premier flux de gaz sortant du réacteur.

Ceci peut s'expliquer par le fait que l'écoulement de fluide dans le coude est dévié progressivement et de façon contrôlée de sa trajectoire initiale donnée par l'axe médian pour atteindre son orientation finale.

On notera d'ailleurs que le rayon de courbure peut être plus ou moins grand selon l'application envisagée.

Ainsi, un faible rayon de courbure conférera un encombrement axial (dans une direction parallèle à celle de l'axe médian) réduit en plus de l'encombrement radial réduit.

Un grand rayon de courbure conférera une plus grande extension axiale, tout en conservant un encombrement radial réduit.

Le coude progressif est formé par exemple par cintrage d'un tronçon de conduit rectiligne.

Selon une autre caractéristique, le coude est formé par une portion droite de conduit raccordée à la portion rectiligne suivant un angle de raccord.

Ainsi, le coude présente à l'extérieur une brusque variation de rayon de courbure.

L'écoulement de fluide interne au conduit est donc dévié par le coude de façon brusque, ce qui induit dans l'écoulement et dans le jet formé des perturbations. La déviation brusque induit des survitesses dans la partie interne du coude, probablement induites par des décollements à l'intérieur des conduits. Ces survitesses peuvent être favorables aux générations de tourbillons longitudinaux et amplifier les effets des jets.

On notera que la portion droite peut être plus ou moins tronquée sur un de ses côtés afin de pouvoir se raccorder facilement à la première portion rectiligne et sans augmenter l'encombrement de façon déraisonnable.

Une telle portion tronquée prend, par exemple, une forme de coin ou de triangle suivant une vue dans un plan contenant l'axe longitudinal XX' du réacteur et l'axe médian.

La portion droite peut être assemblée de différentes manières à la première portion, notamment par soudage.

Selon une caractéristique, l'orifice de sortie est disposé dans un plan qui est sensiblement tangent à la première portion de conduit rectiligne.

L'orifice est ainsi agencé dans le prolongement axial de la première portion (à ras de la portion de conduit), ce qui permet de contrôler la déviation de l'écoulement et de ne pas augmenter l'encombrement radial de l'ensemble.

On notera que l'orifice de sortie peut être incliné par rapport à l'axe médian sans augmenter l'encombrement.

Selon une caractéristique, ledit au moins un conduit est disposé dans l'épaisseur de la paroi du réacteur (dimension de la paroi prise radialement ou transversalement par rapport à l'axe longitudinal XX').

Cet agencement est rendu possible par la faible épaisseur ou extension radiale du ou des conduits ainsi configurés.

Selon une caractéristique, la seconde portion formant un coude confère audit au moins un conduit une inclinaison en direction de l'axe longitudinal XX' du réacteur suivant un angle de pénétration.

Le choix de l'orientation de l'orifice de sortie par rapport à l'axe médian de la première portion permet de donner au(x) conduit(s) l'angle de pénétration souhaité.

Cet angle apparaît dans une vue en projection dans un plan contenant l'axe longitudinal et l'axe médian.

Selon une caractéristique, la seconde portion formant un coude confère audit au moins un conduit une inclinaison par rapport à l'axe longitudinal XX' du réacteur suivant un angle de dérapage.

Le choix de l'orientation de l'orifice de sortie par rapport à l'axe médian de la première portion permet de donner au(x) conduit(s) l'angle de dérapage souhaité.

Selon une caractéristique, la seconde portion formant un coude confère audit au moins un conduit une double inclinaison selon un angle de pénétration et selon un angle de dérapage.

Pour une orientation donnée de l'axe médian de la première portion (celui-ci peut, par exemple, être déjà orienté suivant un angle de pénétration et/ou un angle de dérapage), le coude confère, par son orientation vis-à-vis de l'axe médian, à la fois l'angle de pénétration final et l'angle de dérapage final souhaités.

On peut ainsi concevoir que le coude permet d'ajuster précisément la direction du jet de fluide généré par la partie terminale du ou des conduits.

Selon une caractéristique, les conduits sont intégrés dans la paroi, ce qui permet de réduire l'encombrement.

Selon une caractéristique, l'extrémité aval de la paroi comporte une pluralité de chevrons répartis à la périphérie de celle-ci afin de former un dispositif mécanique d'atténuation acoustique.

Les chevrons interagissent avec le flux de gaz issu de l'extrémité aval où ils sont disposés, donnant ainsi naissance à des tourbillons qui se propagent le long du flux (dans la direction longitudinale du réacteur) et contribuent à réduire le bruit.

Lorsque les conduits d'éjection de fluide sont agencés en relation avec l'extrémité aval de la paroi, les chevrons peuvent être aménagés au niveau de cette même extrémité pour renforcer l'effet d'atténuation du bruit généré par le réacteur.

À titre de variante, les chevrons peuvent être aménagés au niveau d'une autre extrémité aval de paroi qui entoure la sortie d'un autre flux éjecté du réacteur.

Selon une autre variante, les conduits d'éjection de fluide et les chevrons peuvent être intégrés à la même extrémité aval de paroi, tandis qu'une autre extrémité aval de paroi entourant la sortie d'un autre flux éjecté du réacteur peut également être équipée de chevrons seuls ou de conduits seuls ou bien de chevrons en coopération avec des conduits.

Selon une caractéristique, les conduits sont associés à des chevrons qui confèrent à l'extrémité aval de la paroi une forme dentelée comprenant une succession de sommets et de creux.

Le jet fluidique sortant de chaque conduit s'associe au tourbillon longitudinal généré au niveau du chevron associé et renforce ainsi son action antibruit.

L'association des jets de fluide aux chevrons permet :
- d'étendre l'impact spatial des chevrons, c'est-à-dire à effet identique, d'avoir des chevrons plus courts (moins pénalisants en croisière) ou à taille de chevron identique, d'en augmenter l'efficacité,
- de créer des effets spatiaux nouveaux dans la mesure où les jets interagissent avec le jet propulsif en différentes positions à partir du bord de fuite ; ceci permet donc d'avoir différents gradients de pression, ce qui peut être favorable à l'action des jets en amplifiant par exemple leur pénétration.

L'invention a également pour objet un aéronef comprenant au moins un réacteur conforme au bref exposé mentionné ci-dessus.

D'autres caractéristiques et avantages apparaîtront au cours de la description qui va suivre, donnée uniquement à titre d'exemple non limitatif et faite en référence aux dessins annexés, sur lesquels :
- la figure 1 est une vue générale schématique en coupe longitudinale d'un réacteur d'aéronef dans laquelle seule la partie supérieure du capot de soufflante a été enlevée;
- la figure 2 est une vue schématique en perspective d'une extrémité aval de paroi de nacelle équipée selon un premier mode de réalisation de l'invention ;
- les figures 3a et 3b illustrent de façon schématique un exemple de réalisation d'une partie terminale de conduit selon l'invention ;
- les figures 3c et 3d illustrent de façon schématique différentes orientations spatiales de la partie terminale de conduit représentée sur les figures 3a et 3b ;
- la figure 3e illustre de façon schématique un agencement possible d'une partie terminale de conduit sur le bord de fuite de la tuyère de réacteur ;
- la figure 3f illustre de façon schématique l'intégration d'une partie terminale de conduit à l'intérieur d'une paroi de tuyère de réacteur ;
- la figure 3g illustre une variante de réalisation de la partie terminale de conduit représentée sur la figure 3a ;
- la figure 4a illustre de façon schématique une partie terminale de conduit selon un autre mode de réalisation de l'invention ;
- la figure 4b illustre une partie terminale de conduit selon une variante de réalisation de la partie terminale de conduit de la figure 4a ;
- la figure 5 illustre un autre mode de réalisation de l'invention dans lequel des conduits coudés sont associés à des chevrons.

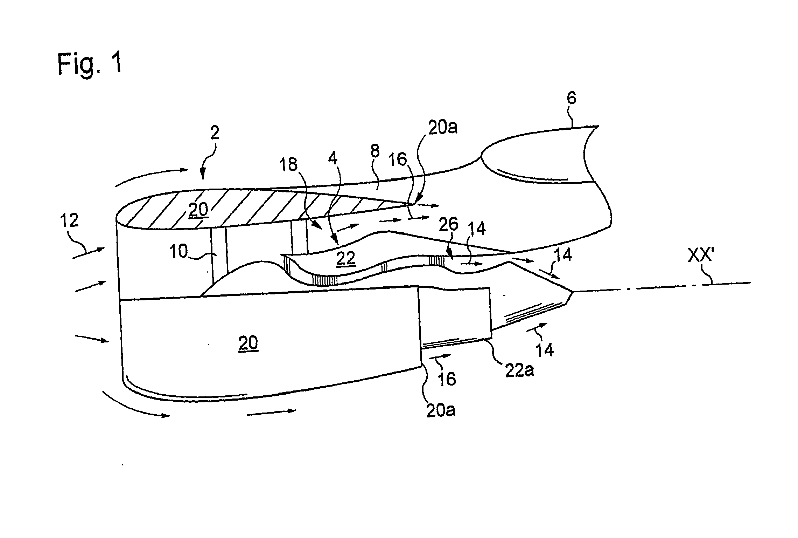

Comme représenté à la figure 1 et désigné par la référence générale notée 2, une nacelle de réacteur d'aéronef enveloppe une turbomachine 4 et est montée sous une aile 6 d'un aéronef de façon connue grâce à un mât de réacteur 8.

La turbomachine 4 comprend un générateur de gaz qui entraine une soufflante 10 montée sur l'arbre du générateur, en amont de ce dernier suivant la direction longitudinale de la nacelle de réacteur.

La nacelle présente une symétrie de révolution autour de l'axe longitudinal XX'.

Le flux d'air 12 qui entre dans la nacelle, traverse longitudinalement celle-ci, pénètre en partie dans le générateur de gaz 4 et participe à la combustion.

Le flux propulsif chaud 14 éjecté en sortie du générateur est appelé flux primaire.

La partie du flux d'air 12 entrant dans la nacelle et qui ne traverse pas le générateur de gaz est entrainée par la soufflante 10.

Ce flux propulsif froid 16, appelé flux secondaire, s'écoule dans un passage annulaire 18 agencé de façon concentrique par rapport au flux primaire 14.

Ce passage 18 est formé entre une paroi longitudinale externe 20 (capot de nacelle) et une paroi longitudinale interne 22 (capot moteur) entourant le générateur de gaz.

Le flux secondaire 16 est éjecté de la nacelle à l'extrémité aval 20a de la paroi externe 20, sensiblement suivant la direction longitudinale du réacteur.

La paroi longitudinale interne 22 définissant l'enveloppe externe du générateur de gaz définit avec la partie longitudinale centrale 24 constituant le coeur du moteur un autre passage annulaire 26 par lequel s'écoule le flux primaire 14.

Ce flux est plus particulièrement éjecté à l'extrémité aval 22a de la paroi interne 22.

Un dispositif fluidique de réduction du niveau sonore du réacteur selon l'invention est appliqué à la nacelle de réacteur 2 de la figure 1.

Ce dispositif est par exemple agencé en relation avec la paroi extérieure 20 (capot extérieur) sensiblement cylindrique de la nacelle et qui entoure le passage annulaire 18 par lequel est éjecté le flux secondaire 16.

Il peut également être agencé en relation avec la paroi intérieure 22 (capot intérieur) de la nacelle qui entoure la turbomachine 4 et à l'extrémité de laquelle est éjecté le flux primaire 14.

On notera qu'un dispositif fluidique peut être prévu à l'une et/ou à l'autre des deux parois concentriques (capots extérieur et intérieur).

Plus particulièrement, le dispositif fluidique selon l'invention est associé à une extrémité dite aval 20a et/ou 22a de la paroi concernée, au niveau du bord de fuite de celle-ci (également appelé lèvre de sortie).

Le dispositif fluidique selon l'invention est apte à générer, sur commande, une perturbation de l'écoulement immédiatement en aval de l'extrémité aval de la paroi à la périphérie extérieure du flux (primaire ou secondaire) éjecté par cette extrémité.

On notera que le dispositif fluidique selon l'invention peut être ajouté simplement à une tuyère de nacelle de réacteur existante, sans remettre en cause toute la conception et la fabrication de cette dernière.

La perturbation fluidique modifie la façon dont le flux éjecté rencontre le flux extérieur (qui est l'air environnant la nacelle lorsque le flux éjecté est le flux secondaire) et interagit avec le flux éjecté afin de former des tourbillons qui se propagent longitudinalement vers l'aval.

Le phénomène précité a pour but de diminuer le bruit généré par le réacteur ainsi équipé, notamment lors des phases de décollage et d'approche de l'aéronef.

Le dispositif selon l'invention peut revêtir différentes formes de réalisation et certaines structures du dispositif vont être décrites dans ce qui suit.

Toutefois, chacune de ces structures offre l'avantage de réduire de façon efficace le bruit généré par un réacteur de grandes dimensions (par exemple, diamètre de la couronne extérieure de la nacelle de l'ordre du mètre).

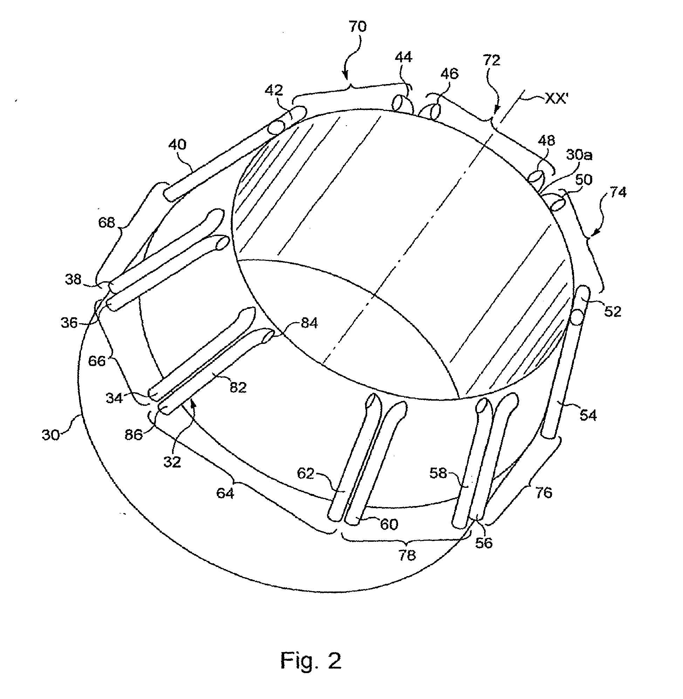

Sur la figure 2, plusieurs dispositifs fluidiques conformes à un premier mode de réalisation de l'invention équipent l'une des deux parois de nacelle représentées à la figure 1 et qui, ici est référencée 30. La paroi représentée à la figure 2 forme une tuyère dans laquelle s'écoule un premier flux (primaire ou secondaire) qui est éjecté à l'extrémité aval 30a de la paroi suivant la direction donnée par l'axe XX'.

Dans ce mode de réalisation les dispositifs fluidiques 32, 34, 36, 38, 40, 42, 44, 46, 48, 50, 52, 54, 56, 58, 60, 62 sont, par exemple, régulièrement répartis à la périphérie extérieure de l'extrémité aval 30a de la paroi, au niveau de la couronne de sortie, et sont écartés les uns des autres.

Chaque dispositif prend la forme d'un conduit qui est apte à éjecter un jet de fluide à l'extrémité aval 30a de la paroi. Selon l'orientation donnée au jet par le conduit, le jet interagit avec le premier flux ou le second flux extérieur qui s'écoule à l'extérieur le long de la paroi 30 ou bien avec les deux flux si le jet est dirigé à l'interface des deux flux.

À titre de variante, certains conduits peuvent être orientés vers le premier flux tandis que certains autres sont orientés vers le second flux.

On notera que, dans d'autres formes de réalisation, les dispositifs peuvent être intégrés dans l'épaisseur de la paroi ou sur la face interne de celle-ci (périphérie interne) qui est en contact avec l'écoulement du premier flux (primaire ou secondaire) éjecté.

Il convient également de noter que les dispositifs peuvent être répartis de façon différente selon l'azimut.

Ceci permet par exemple de tenir compte de la présence du mât réacteur 8 qui modifie l'écoulement.

Cet agencement non homogène permet également de prendre en compte la directivité du bruit et les contraintes réglementaires en matière de bruit par rapport au voisinage. Il est en effet préférable de limiter le bruit rayonné vers le sol plutôt que le bruit rayonné vers le ciel.

Dans l'application représentée sur la figure 2, les conduits des dispositifs sont associés par paires 64, 66, 68, 70, 72, 74, 76, 78 et convergent l'un vers l'autre au sein d'une même paire de conduits comme décrit dans la demande internationale de brevet W02002/013243.

Ainsi, les jets produits par les conduits d'une même paire convergent et forment un triangle fluidique d'interaction.

L'inclinaison des conduits donne aux jets qui en sont issus une composante de vitesse tangentielle qui, du fait de l'interaction avec le jet propulsif, provoque une rotation des jets sur eux-mêmes, en sens inverse pour deux jets convergents. Cette rotation peut être favorisée par des moyens tels que ceux mentionnés ci-dessus. Par ailleurs, l'angle de convergence précité amène les deux jets convergents à se rencontrer à courte distance, de l'ordre du quart du diamètre de la tuyère.

Lorsque la réalisation concerne la couronne séparant le jet extérieur froid (flux secondaire) et le jet central chaud (flux primaire), la rotation des jets entraîne de l'air froid extérieur à l'intérieur du jet propulsif entre les jets convergents, de l'air chaud ressortant au contraire à l'extérieur des jets.

Il en résulte une homogénéisation des températures dès la sortie de la tuyère, pouvant contribuer à la réduction du bruit généré par cette tuyère. Il se produit également un effet d'écran thermique, également favorable à la réduction du bruit rayonné.

Dans l'exemple illustré à la figure 2, les paires de conduits sont réparties de sorte que le conduit convergeant dans un sens, juxtapose directement le conduit de la paire adjacente et qui présente une convergence opposée.

Cependant, l'écartement entre les tubes d'une même paire ainsi que l'écartement des tubes adjacents de deux paires différents sera fonction du nombre de tubes devant équiper la tuyère et du diamètre de cette dernière. En effet, dans l'exemple illustré, la tuyère comporte huit paires (64, ..., 78) de tubulures. Il est bien entendu évident qu'il s'agit ici d'un exemple de réalisation donné à titre d'illustration, le nombre de paires de tubulures pouvant être inférieur ou supérieur. Le nombre de paires de tubulures adjointes à la tuyère sera notamment fonction de la taille du réacteur, mais également de la nuisance sonore des réacteurs.

Ainsi, afin de réduire le bruit lié aux jets propulsifs des réacteurs au moment de la phase de décollage ou de la phase d'approche de l'avion, on déclenche un soufflage d'air comprimé au travers des conduits d'amenée d'air jusqu'aux tubulures réparties au niveau de la couronne de sortie de ladite tuyère. La couronne concernée peut être soit celle (couronne intérieure) séparant le flux chaud (flux primaire) et le flux froid (flux secondaire), soit celle séparant le flux froid (flux secondaire) et l'air ambiant (couronne de la nacelle). De par le positionnement des tubulures au niveau de la couronne de sortie ainsi que leur répartition, les jets d'air comprimés sont propulsés hors des tubulures selon des incidences de convergence et de pénétration, perturbant alors le jet propulsif selon des triangles d'interaction fluide dans le sens de l'écoulement.

Les jets d'air constituent des jets contrôlés. Reliés à la partie haute pression de réacteur, leur alimentation est rendue effective uniquement dans les phases où le contrôle est nécessaire (généralement lors des phases de décollage ou d'atterrissage). En dehors de ces phases, les dispositifs fluidiques selon l'invention sont rendus inactifs par simple coupure de l'amenée d'air comprimé. L'avion ainsi équipé, ne présente aucune pénalisation en terme de traînée ou de perte de poussée.

On notera que les jets peuvent être activés indépendamment les uns des autres, offrant ainsi un système de perturbation du flux éjecté particulièrement flexible. Ainsi, il peut être envisagé une activation partielle desdits jets : actionnement des jets positionnés sur le haut, le bas, la droite ou la gauche de ladite tuyère, modifiant ainsi la directivité des émissions sonores.

Selon une autre variante, les jets de contrôle peuvent être actionnés de façon instationnaire afin de réduire les débits des jets de contrôle ou d'améliorer les performances du contrôle.

On va maintenant décrire la constitution d'un de ces dispositifs fluidiques en prenant pour exemple le dispositif 32, tous les autres dispositifs étant identiques à celui-ci dans ce mode de réalisation.

Le dispositif 32 comporte un conduit 80 qui est relié, par exemple, via une tubulure d'amenée de fluide, ici d'air (la tubulure n'est pas représentée), à la partie haute pression du réacteur.

Le conduit 80 comporte une partie terminale 82 qui est pourvue, à son extrémité libre, d'un orifice de sortie 84. Ainsi alimenté en air comprimé, le conduit transporte cet air jusqu'à son orifice de sortie où il est éjecté sous forme d'un jet.

Dans l'exemple représenté sur la figure 2, l'orifice est de forme circulaire et le jet adopte un diamètre circulaire. Toutefois, d'autres configurations d'orifices de sortie sont possibles.

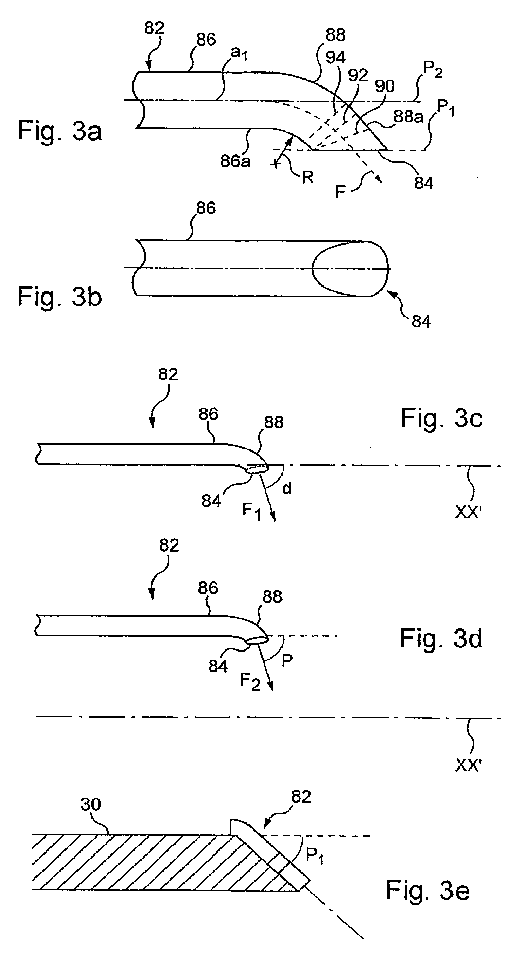

La figure 3a illustre la partie terminale 82 du conduit 80 dans un plan perpendiculaire au plan dans lequel l'orifice de sortie 84 est agencé.

Le plan de l'orifice de sortie peut adopter diverses orientations dans l'espace et l'axe longitudinal XX' n'est pas nécessairement inclus dans ce plan.

La figure 3b représente en vue de dessous cette partie terminale et fait apparaître la section de passage de l'orifice de sortie 84 vue de face.

Comme représenté sur la figure 3a, la partie terminale 82 comprend plus particulièrement, successivement de l'amont vers l'aval, une première portion de conduit rectiligne 86 et une seconde portion de conduit 88 formant un coude par rapport à la première portion.

La première portion est alignée suivant un axe a₁, appelé axe médian, qui, dans le cas d'une portion cylindrique, est confondu avec l'axe de révolution du cylindre.

Lorsque la portion de conduit n'est pas cylindrique mais revêt une autre forme (exemple : portion aplatie ou évasée afin de produire un jet sensiblement plan), cet axe est placé dans un plan médian de la portion (le plan médian est perpendiculaire au plan de la figure 3a).

L'écoulement de fluide circulant dans la première portion est dirigé selon cet axe.

La seconde portion 88 forme un coude pour dévier l'écoulement de sa trajectoire axiale. Ce coude s'étend sur une courte distance à partir d'une extrémité aval 86a de la première portion jusqu'à l'extrémité libre de la seconde portion qui est munie de l'orifice de sortie 84.

La partie terminale 82 ainsi coudée est formée à partir d'une portion de conduit rectiligne dont une portion d'extrémité est cintrée dans la direction souhaitée.

On donne de cette façon une courbure continue à la partie terminale du conduit 80.

L'extrémité libre de la portion terminale courbée est alors taillée en biseau pour former l'orifice de sortie 84 avec l'orientation angulaire souhaitée par rapport à l'axe a₁ et à une distance donnée de cet axe.

Dans l'exemple illustré sur la figure 3a, l'orifice 84 est situé dans un plan P1 qui est perpendiculaire au plan dans lequel s'étend le coude (plan de la figure). Le plan P1 est parallèle à un plan P2 contenant l'axe a₁ et qui est perpendiculaire au plan dans lequel s'étend le coude.

Ainsi, l'extrémité libre de la partie terminale a été taillée en oblique par rapport à la direction d'extension afin de réduire l'encombrement généré par la courbure.

En outre, l'orifice de sortie est placé à faible distance de l'axe a₁ pour diminuer l'encombrement de la partie terminale dans la direction d'extension du coude.

La distance est prise entre le centre de l'orifice de sortie et l'axe a₁.

Cette distance est généralement comprise entre un et deux rayons du tube formant la portion rectiligne 86. Pour des conduits non cylindriques la dimension de référence sera une dimension équivalente du type demi-largeur transversale...

La flèche F donne, en sortie de l'orifice, la direction selon laquelle l'écoulement de fluide a été dévié par le coude.

Cette direction est parallèle à la direction d'extension de la paroi extérieure 88a du coude.

On notera que la courbure du coude peut être plus ou moins prononcée, c'est-à-dire que le rayon de courbure R peut être de faible valeur ou de grande valeur selon l'application visée et, notamment, selon la longueur dont on dispose pour associer le coude à la paroi du réacteur.

Le contrôle de la courbure permet de choisir la direction de l'écoulement et donc du jet formé à l'orifice de sortie.

Ainsi, selon la direction dans laquelle le coude est formé dans l'espace, la courbure permet de conférer à la partie terminale 82 du conduit un angle de dérapage, un angle de pénétration ou une combinaison de ces deux types d'angle.

La partie terminale 82 du conduit 80 et de chacun des conduits de la figure 2 est incurvée dans une direction qui confère aux conduits à la fois un angle de dérapage d par rapport à l'axe longitudinal XX' (voir cet angle sur la figure 3c) et un angle de pénétration p en direction de l'axe XX' (voir cet angle sur la figure 3d). L'angle de dérapage permet de faire converger l'un vers l'autre les deux conduits d'une même paire. L'angle de pénétration permet, quant à lui, d'incliner le jet issu du conduit sur l'axe XX' afin qu'il pénètre (plus ou moins selon l'inclinaison sélectionnée) dans le flux de gaz éjecté par la tuyère.

On notera que les conduits peuvent être agencés en suivant l'inclinaison du bord de fuite, comme représenté schématiquement sur la figure 3e, ce qui leur procure déjà un premier angle de pénétration p1 auquel se rajoute l'angle conféré par le coude.

Il convient également de remarquer que l'angle de pénétration peut varier d'un conduit à l'autre ou pour certains conduits seulement, afin de faire varier localement l'orientation du jet en fonction de circonstances spécifiques (encombrement, directivité des nuisances sonores ...).

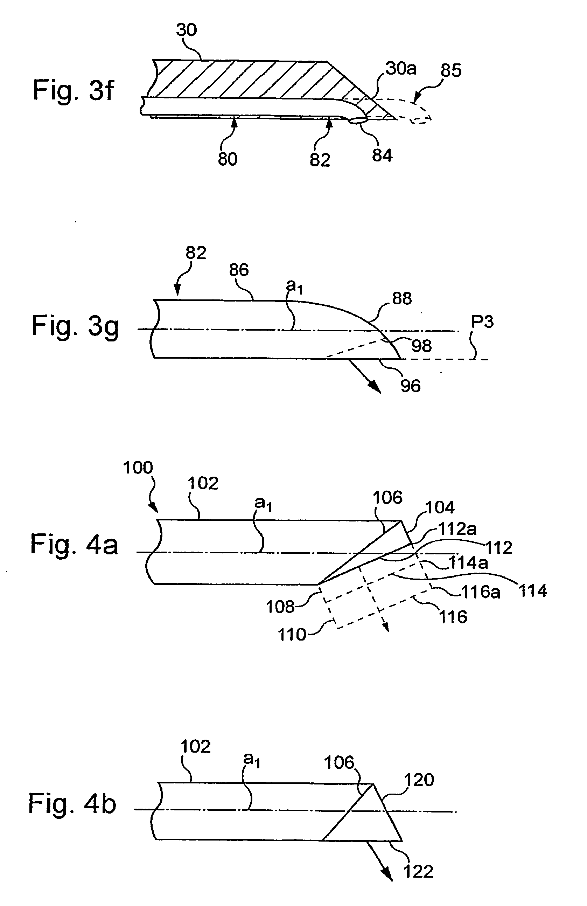

Alternativement, les conduits peuvent être disposés parallèlement à la direction d'extension de la paroi du réacteur, sans angle de pénétration, en étant par exemple agencés dans l'épaisseur de la paroi du réacteur (voir figure 3f).

Sur la figure 3f, on a également représenté selon une variante (en pointillés), la partie terminale 85 du conduit qui a été prolongée de manière à déboucher axialement au-delà de l'extrémité aval 30a de la paroi, sans toutefois conférer un encombrement radial supérieur à celui de la partie terminale 82.

À titre de variante, le coude de la partie terminale 82 du conduit 80 de la figure 3a peut être formé dans une direction telle que le plan contenant l'orifice de sortie 84 passe par l'axe longitudinal XX' du réacteur (direction perpendiculaire à l'axe XX' et tangente à la périphérie de la paroi).

Ainsi, l'orientation F donnée au jet de fluide issu du conduit correspondra uniquement à un angle de dérapage par rapport à l'axe XX'.

Selon une autre variante, le coude peut être uniquement formé en s'étendant en direction de l'axe XX' afin que l'orientation F du jet de fluide corresponde uniquement à un angle de pénétration.

Comme représenté sur la figure 3a, d'autres orientations d'orifices de sortie peuvent être envisagées telles que celle donnée par l'orifice 90 (en pointillés) qui est davantage rapproché de l'axe a₁, ce qui réduit l'encombrement axial du coude.

Les orifices 92 et 94 sont des autres exemples montrant des coudes encore plus courts et donc de plus faible encombrement.

On notera que l'angle effectif de déviation n'est pas exactement l'angle géométrique de sortie du conduit. En outre, plus les coudes sont courts, plus l'angle de sortie est faible par rapport à l'angle géométrique.

La forme continue de la courbure permet de produire un jet de fluide dévié en assurant un excès de vitesse dans la partie externe de la courbure. Cet excès de vitesse est favorable à la création de tourbillons longitudinaux qui ont un rôle bénéfique dans l'atténuation acoustique.

La figure 3g illustre une variante de réalisation dans laquelle l'orifice de sortie 96 est formé à ras de l'extrémité libre du coude une fois taillée, et est disposé dans un plan P3 parallèle au plan P1 de la figure 3a et qui tangente la paroi externe de la première portion rectiligne 86.

L'orifice de sortie ainsi conformé est plus proche de l'axe a₁ que l'orifice 84 de la figure 3a et procure donc une grande compacité au conduit (l'orifice s'inscrit dans l'enveloppe externe définie par le conduit et donc dans l'encombrement généré par celui-ci), tout en permettant de diriger l'écoulement de fluide de façon contrôlée.

On notera que l'orifice de sortie peut alternativement être agencé dans un plan oblique par rapport au plan P3, comme l'orifice 98, pour raccourcir davantage le coude et donc l'encombrement axial de ce dernier.

Les figures 4a et 4b illustrent deux variantes d'un même mode de réalisation de l'invention dans lequel la seconde portion de conduit de la partie terminale est raccordée à la première portion rectiligne en formant un coude à angle vif par rapport à celle-ci et qui s'étend sur une courte distance.

Comme représenté sur la figure 4a, la partie terminale 100 du conduit comprend une première portion de conduit rectiligne 102 d'axe médian a₁ et une seconde portion de conduit 104 qui comprend une portion droite raccordée à la première portion au niveau d'un plan de joint ou de raccord oblique 106. L'assemblage des deux portions est effectué par exemple par soudage.

On notera qu'avant de procéder à la jonction des deux portions, la première portion 102 est taillée en biseau à son extrémité libre afin de lui procurer la forme biseautée du plan de joint 106.

La seconde portion rectiligne est elle aussi taillée, par exemple en forme de coin (en vue de profil), afin de lui donner la forme très raccourcie de la figure 4a.

Toutefois, la seconde portion rectiligne peut être plus longue comme l'illustrent les formes 108 et 110 en pointillés sur la figure 4a.

L'orifice de sortie de chacune de ces secondes portions, à savoir l'orifice 112, 114, 116 est ainsi agencé à une distance de plus en plus grande de l'axe a₁ sans toutefois pénaliser de manière trop importante l'encombrement global du conduit ainsi configuré.

Les mêmes particularités et avantages que ceux décrits en référence aux figures 3a à 3g s'appliquent également ici à l'exception de l'impact du coude sur la formation du jet et sur ses caractéristiques et ils ne seront donc pas rappelés.

En effet, le caractère brutal du coude induit des effets différents sur l'écoulement interne au conduit et sur la formation du jet.

En particulier, l'excès de vitesse de fluide induit par la courbure se produit ici dans la partie intérieure de la courbure.

On notera que la partie de l'orifice de sortie située sur le bord extérieur du coude à sa pointe extérieure, et qui est référencée 112a pour l'orifice 112, 114a pour l'orifice 114 et 116a pour l'orifice 116, permet de fixer localement les décollements de fluide.

Ainsi, le jet formé est moins diffus et a une durée de vie plus longue et donc une efficacité accrue.

Les orientations dans l'espace des orifices de sortie sont toutes identiques sur la figure 4a mais peuvent bien entendu varier, tout comme cela a été expliqué en référence aux figures 3a à 3g, afin de conférer différents types d'angles (angle de dérapage, angle de pénétration, angle ayant une composante d'angle de dérapage et une composante d'angle de pénétration) au conduit ainsi coudé.

La figure 4b illustre une variante de réalisation dans laquelle la seconde portion de conduit 120 qui est raccordée au plan de joint 106 de l'extrémité libre de la première portion rectiligne 102 forme également un coin en vue de côté.

Toutefois, le coin est plus volumineux et l'orifice de sortie 122 du coude est disposé dans l'alignement d'une des parois de la première portion rectiligne 102, tangeantant ainsi celle-ci.

De cette manière, le coude 120 ne s'étend pas latéralement (transversalement) par rapport à l'axe a₁ au-delà de l'enveloppe externe du conduit, ce qui n'augmente donc pas l'encombrement radial du conduit.

En outre, en ne faisant pas saillie par rapport à l'enveloppe externe radiale du conduit, le coude ne perturbe pas l'écoulement environnant.

Les particularités et avantages énoncés pour la configuration de la figure 4a s'appliquent également ici, hormis pour ce qui est des différentes positions de l'orifice de sortie par rapport à l'axe a₁, et ils ne seront donc pas rappelés.

Dans l'exposé qui précède en référence aux figures 2 à 4b, les orifices de sortie des conduits ont toujours été représentés orientés vers le bas (en direction de l'axe XX') et/ou vers le côté (en direction d'autres orifices de sortie).

Toutefois, les conduits selon l'invention peuvent être coudés dans une direction permettant aux orifices de sortie, ou à certains d'entre eux seulement, d'être orientés vers l'extérieur de la tuyère (radialement en écartement de l'axe XX') et non vers l'intérieur afin d'interagir davantage avec le flux de gaz extérieur à la tuyère.

On notera que les orifices de sortie des conduits peuvent également être inclinés deux à deux, l'un vers l'autre, au sein d'une même paire de conduits afin de converger.

Il convient de remarquer que les orifices de sortie des agencements des figures 2 à 4b (ou les faces de sortie des conduits qui comportent ces orifices) ne doivent pas être trop éloignés de l'axe médian a₁ de la portion de conduit rectiligne située en amont du coude.

Une distance voisine de deux fois la valeur du rayon de la portion de conduit amont (ou d'environ deux fois la demi-largeur ou demi-hauteur sur la figure, si la portion rectiligne n'est pas cylindrique) permet d'obtenir un encombrement réduit satisfaisant et un contrôle fluidique efficace du jet.

Lorsque les orifices de sortie tangentent les lignes aérodynamiques du conduit dans sa portion rectiligne (orifice 96 sur la figure 3g, orifice 122 sur la figure 4b) ou, à tout le moins sont inscrites dans son enveloppe externe (orifice 98 sur la figure 3g, orifice 122 sur la figure 4a), les pertes de performances aérodynamiques sont minimisées.

Les orifices de sortie peuvent s'étendre au-delà des lignes aérodynamiques de la portion rectiligne du conduit (au-delà de la partie inférieure de cette portion sur les figures) comme sur les figures 3a et 4a, en restant dans un plan de sortie parallèle à l'axe a₁ (orifice 84) ou en étant inclinés par rapport à cet axe (orifices 90, 114, 116).

En général, les orifices de sortie s'étendent au maximum sur une distance d'un rayon (ou d'une demi-largeur ou demi-hauteur) à partir de la partie inférieure de la portion de conduit rectiligne afin de conserver un encombrement réduit et afin de ne pas pénaliser les performances aérodynamiques.

On notera que lorsque les orifices sont orientés en oblique, leur distance à l'axe a1 ou à la ligne aérodynamique inférieure du conduit est prise par rapport à leur centre.

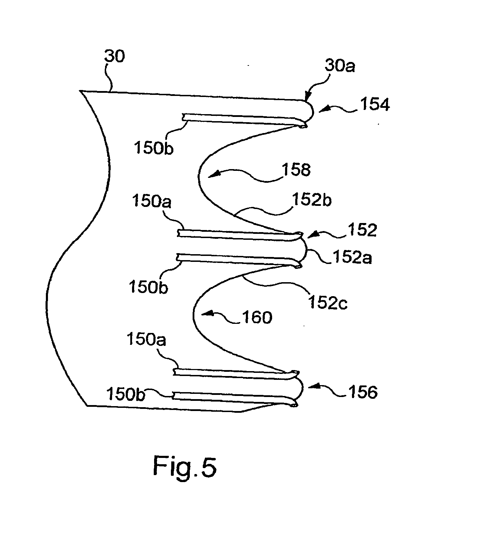

On a représenté de façon très schématique sur la figure 5 l'agencement de deux conduits 150a, 150b en relation avec un chevron 152 aménagé à l'extrémité aval de la paroi 30 de la nacelle afin notamment d'amplifier les effets produits par le chevron.

L'extrémité aval comprend une pluralité de chevrons successifs dont seuls trois sont représentés 152, 154, 156 et chaque chevron peut être équipé d'un dispositif fluidique comprenant les deux conduits 150a, 150b.

Dans ce mode de réalisation les deux conduits 150a, 150b sont disposés de façon parallèle à la médiane du chevron qui passe par le sommet de ce dernier.

Ainsi, les orifices de sortie des extrémités débouchantes des conduits sont situés au sommet 152a du chevron (les extrémités des conduits sont évasées au niveau du sommet) et éjectent, sur commande, un jet de fluide de part et d'autre du sommet.

On notera que d'autres agencements de conduits sont envisageables en relation avec les chevrons.

Ainsi, par exemple, les conduits dans leur portion rectiligne peuvent être agencés le long des portions inclinées 152b, 152c du chevron (ces portions inclinées relient respectivement le sommet 152a du chevron aux creux 158,160 séparant deux chevrons), leur orifice de sortie étant toujours orienté vers l'extérieur du chevron.

Par ailleurs, les orifices de sortie des conduits 150a, 150b de la figure 5 peuvent alternativement être orientés l'un vers l'autre au lieu d'être dos à dos.

Ainsi orientés, les orifices produisent des jets qui prolongent en quelque sorte les effets des chevrons.

Selon une autre variante, les orifices de sortie d'autres conduits peuvent être dirigés sur un creux entre deux chevrons en remplacement ou en plus de l'agencement de la figure 5.

On notera que les différents agencements des figures 3a à 4b peuvent également être associés à des chevrons pour coopérer avec ces derniers.

## Revendications

1. Réacteur d'aéronef, comprenant :
- une paroi (30) entourant un premier flux de gaz qui est éjecté à une extrémité aval (30a) de la paroi suivant un axe longitudinal (XX'), un deuxième flux de gaz s'écoulant à l'extérieur de la paroi dans la direction d'éjection du premier flux de gaz,
- au moins un conduit (80) agencé à la périphérie de l'extrémité aval de la paroi et qui est apte à éjecter un jet de fluide destiné à interagir avec l'un et/ou l'autre flux de gaz, ledit au moins un conduit (80) comprenant une partie terminale (82) munie à son extrémité libre d'un orifice de sortie (84) par lequel le jet de fluide est éjecté,
**caractérisé en ce que** la partie terminale comprend successivement une première portion (86) de conduit rectiligne alignée suivant un axe dit médian et une seconde portion (88) de conduit formant un coude par rapport à la portion rectiligne, la seconde portion ayant une extrémité libre munie de l'orifice de sortie et est suffisamment proche de l'axe médian (a₁) de la première portion de manière à conférer à la partie terminale un encombrement réduit dans la direction de formation du coude, l'orifice de sortie ne devant pas être à une distance de l'axe médian qui est supérieure à deux fois la valeur du rayon de la première portion de conduit, la distance étant prise entre l'axe et le milieu de l'orifice.

2. Réacteur d'aéronef selon la revendication 1, **caractérisé en ce que** la seconde portion formant un coude présente une courbure continue.

3. Réacteur d'aéronef selon la revendication 1, **caractérisé en ce que** le coude est formé par une portion droite de conduit raccordée à la portion rectiligne suivant un angle de raccord.

4. Réacteur d'aéronef selon l'une des revendications 1 à 3, **caractérisé en ce que** l'orifice de sortie est disposé dans un plan qui est sensiblement tangent à la première portion de conduit rectiligne.

5. Réacteur d'aéronef selon l'une des revendications 1 à 4, **caractérisé en ce que** ledit au moins un conduit est disposé dans l'épaisseur de la paroi du réacteur.

6. Réacteur d'aéronef selon l'une des revendications 1 à 5, **caractérisé en ce que** la seconde portion formant un coude confère audit au moins un conduit une inclinaison en direction de l'axe longitudinal (XX') du réacteur suivant un angle de pénétration.

7. Réacteur d'aéronef selon l'une des revendications 1 à 6, **caractérisé en ce que** la seconde portion formant un coude confère audit au moins un conduit une inclinaison par rapport à l'axe longitudinal (XX') du réacteur suivant un angle de dérapage.

8. Réacteur d'aéronef selon les revendications 6 et 7, **caractérisé en ce que** la seconde portion formant un coude confère audit au moins un conduit une double inclinaison selon un angle de pénétration et selon un angle de dérapage.

9. Réacteur d'aéronef selon l'une des revendications 1 à 8, **caractérisé en ce que** les conduits sont associés à des chevrons qui confèrent à l'extrémité aval de la paroi une forme dentelée comprenant une succession de sommets et de creux.

10. Aéronef **caractérisé en ce qu'**il comprend un réacteur d'aéronef selon l'une des revendications 1 à 9.

## Patentansprüche

1. Strahltriebwerk für Luftfahrzeuge, umfassend:
- eine Wand (30), die einen ersten Gasstrom umgibt, der an einem stromabwärtigen Ende (30a) der Wand entlang einer Längsachse (XX') ausgestoßen wird, wobei ein zweiter Gasstrom außerhalb der Wand in Ausstoßrichtung des ersten Gasstroms strömt,
- zumindest einen Kanal (80), der am Umfang des stromabwärtigen Endes der Wand angeordnet und dazu geeignet ist, einen Fluidstrahl auszustoßen, der dazu bestimmt ist, mit dem einen und/oder anderen Gasstrom in Wechselwirkung zu treten, wobei der zumindest eine Kanal (80) einen Endbereich (82) aufweist, der an seinem freien Ende mit einer Austrittsöffnung (84) versehen ist, durch welche der Fluidstrahl ausgestoßen wird,
**dadurch gekennzeichnet, dass**
der Endbereich aufeinanderfolgend einen geradlinigen ersten Kanalabschnitt (86) aufweist, der entlang einer Achse, Mittelachse genannt, ausgerichtet ist, sowie einen gegenüber dem geradlinigen Abschnitt gekrümmt ausgebildeten zweiten Kanalabschnitt (88), wobei der zweite Abschnitt ein freies Ende aufweist, das mit der Austrittsöffnung versehen ist und nahe genug an der Mittelachse (a₁) des ersten Abschnitts liegt, so dass dem Endbereich ein verminderter Raumbedarf in Richtung der Krümmung verliehen wird, wobei die Austrittsöffnung sich nicht in einem Abstand von der Mittelachse befinden soll, der größer als der zweifache Wert des Radius des ersten Kanalabschnitts ist, wobei der Abstand zwischen der Achse und dem Zentrum der Öffnung gemessen wird.

2. Strahltriebwerk für Luftfahrzeuge nach Anspruch 1, **dadurch gekennzeichnet, dass** der eine Krümmung bildende zweite Abschnitt eine kontinuierliche Biegung aufweist.

3. Strahltriebwerk für Luftfahrzeuge nach Anspruch 1, **dadurch gekennzeichnet, dass** die Krümmung von einem geraden Kanalabschnitt gebildet wird, der sich an den geradlinigen Abschnitt unter einem Anschlusswinkel anschließt.

4. Strahltriebwerk für Luftfahrzeuge nach einem der Ansprüche 1 bis 3, **dadurch gekennzeichnet, dass** die Austrittsöffnung in einer Ebene angeordnet ist, die im Wesentlichen tangential zum geradlinigen ersten Kanalabschnitt verläuft.

5. Strahltriebwerk für Luftfahrzeuge nach einem der Ansprüche 1 bis 4, **dadurch gekennzeichnet, dass** der zumindest eine Kanal in der Dicke der Wand des Strahltriebwerks angeordnet ist.

6. Strahltriebwerk für Luftfahrzeuge nach einem der Ansprüche 1 bis 5, **dadurch gekennzeichnet, dass** der eine Krümmung bildende zweite Abschnitt dem zumindest einen Kanal eine Neigung unter einem Eindringwinkel in Richtung der Längsachse (XX') des Strahltriebwerks verleiht.

7. Strahltriebwerk für Luftfahrzeuge nach einem der Ansprüche 1 bis 6, **dadurch gekennzeichnet, dass** der eine Krümmung bildende zweite Abschnitt dem zumindest einen Kanal eine Neigung unter einem Schiebewinkel bezüglich der Längsachse (XX') des Strahltriebwerks verleiht.

8. Strahltriebwerk für Luftfahrzeuge nach den Ansprüchen 6 und 7, **dadurch gekennzeichnet, dass** der eine Krümmung bildende zweite Abschnitt dem zumindest einen Kanal eine zweifache Neigung unter einem Eindringwinkel und unter einem Schiebewinkel verleiht.

9. Strahltriebwerk für Luftfahrzeuge nach einem der Ansprüche 1 bis 8, **dadurch gekennzeichnet, dass** den Kanälen Chevrons zugeordnet sind, die dem stromabwärtigen Ende der Wand eine gezackte Form mit einer Folge von Erhebungen und Vertiefungen verleihen.

10. Luftfahrzeug, **dadurch gekennzeichnet, dass** es ein Strahltriebwerk für Luftfahrzeuge nach einem der Ansprüche 1 bis 9 aufweist.

## Claims

1. Aircraft jet engine, comprising
a wall (30) surrounding a first gas stream that is ejected at a downstream end (30a) of the wall along a longitudinal axis (XX'), a second gas stream flowing outside the wall in the direction of ejection of the first gas stream,
at least one duct (80) arranged at the periphery of the downstream end of the wall and which is able to eject a fluid jet intended to interact with one and/or the other gas stream, the said at least one duct (80) comprising a terminal part (82) provided at its free end with an outlet opening (84) through which the fluid jet is ejected,
**characterized in that** the terminal part successively comprises a first straight duct portion (86) aligned along an axis referred to as median and a second duct portion (88) forming a bend in relation to the straight portion, the second portion having a free end provided with the outlet opening and is sufficiently close to the median axis (a₁) of the first portion so as to impart to the terminal part a reduced space requirement in the direction of formation of the bend, wherein the outlet opening should not be at a distance from the median axis which is longer than twice the value of the first duct portion radius, the distance being taken between the axis and the center of the opening.

2. Aircraft jet engine according to claim 1, **characterized in that** the second portion forming a bend has a continuous curvature.

3. Aircraft jet engine according to claim 1, **characterized in that** the bend is formed by an upright duct portion connected to the straight portion along a connecting angle.

4. Aircraft jet engine according to one of claims 1 to 3, **characterized in that** the outlet opening is disposed in a plane that is more or less tangential to the first straight duct portion.

5. Aircraft jet engine according to one of claims 1 to 4, **characterized in that** the said at least one duct is disposed in the thickness of the wall of the jet engine.

6. Aircraft jet engine according to one of claims 1 to 5, **characterized in that** the second portion forming a bend imparts to the said at least one duct a slant toward the longitudinal axis (XX") of the jet engine along a penetration angle.

7. Aircraft jet engine according to one of claims 1 to 6, **characterized in that** the second portion forming a bend imparts to the said at least one duct a slant in relation to the longitudinal axis (XX') of the jet engine along a lateral angle.

8. Aircraft jet engine according to claims 6 and 7, **characterized in that** the second portion forming a bend imparts to the said at least one duct a dual slant according to a penetration angle and according to a lateral angle.

9. Aircraft jet engine according to one of claims 1 to 8, **characterized in that** the ducts are associated with chevrons that impart to the downstream end of the wall a jagged shape comprising a succession of peaks and valleys.

10. Aircraft **characterized in that** it comprises an aircraft jet engine according to one of claims 1 to 9.
